# EUROPEAN PATENT APPLICATION

(11) **EP 4 459 787 A1**
(43) Date of publication of application: **06.11.2024**
(21) Application number: 23758958.5
(22) Date of filing: 30.01.2023
(51) Int. Cl.: H01P 1/208

(54) **COMMUNICATION APPARATUS**

(30) Priority: 28.02.2022 CN 202210191220
(71) Applicant: Huawei Technologies Co., Ltd., Shenzhen, Guangdong 518129 (CN)
(72) Inventor: WU, Hengheng, Shenzhen, Guangdong 518129 (CN); SHI, Jing, Shenzhen, Guangdong 518129 (CN); MA, Ni, Shenzhen, Guangdong 518129 (CN)
(74) Representative: Goddar, Heinz J.
(86) International application number: PCT/CN2023/073837
(87) International publication number: WO 2023/160333

(57) **Abstract**

Embodiments of this application disclose a communication apparatus. The communication apparatus includes a first filter, a second filter, and a coupling control unit. There is a first coupling rod in a 1^{st} resonant cavity of the first filter, and there is a second coupling rod in a 1^{st} resonant cavity of the second filter. The coupling control unit is located between the 1^{st} resonant cavity of the first filter and the 1^{st} resonant cavity of the second filter, and the coupling control unit is connected to the first coupling rod and the second coupling rod. The first filter and the second filter are configured to filter a radio frequency signal. The coupling control unit is configured to control connection or disconnection between the first coupling rod and the second coupling rod. If the first coupling rod is connected to the second coupling rod, an operating status of the communication apparatus is a power division state; or if the first coupling rod is disconnected from the second coupling rod, an operating status of the communication apparatus is a pass-through state. According to the communication apparatus in this application, a function of a reconfigurable cross coupler can be implemented by using a filter design, to reduce an insertion loss of a system.

## Description

This application claims priority to Chinese Patent Application No. 202210191220.1, filed with the China National Intellectual Property Administration on February 28, 2022 and entitled "COMMUNICATION APPARATUS", which is incorporated herein by reference in its entirety.

### TECHNICAL FIELD

Embodiments of this application relate to the wireless communication field, and in particular, to a communication apparatus.

### BACKGROUND

To adapt to a background of green development and improve flexibility of a signal output status, a reconfigurable cross coupler is used in a radio frequency channel, so that base station performance is ensured and power consumption of the radio frequency channel can be reduced. Generally, an implementation of the reconfigurable cross coupler is that a 90° bridge is implemented in a form of a microstrip, and a reactance element is loaded in the middle of a crossover, so that the reconfigurable crossover is switched between a power division state and a pass-through state by changing a reactance value of the reactance element. Alternatively, another implementation of the reconfigurable cross coupler is that connection of a radio frequency switch is controlled, so that the reconfigurable crossover is switched between a power division state and a pass-through state.

However, when such a reconfigurable cross coupler is used in the radio frequency channel, an insertion loss (insertion loss for short below) of the reconfigurable cross coupler greatly affects a system index.

### SUMMARY

Embodiments of this application provide a communication apparatus, to implement a reconfigurable cross network by jointing a filter, so that the communication apparatus can operate in a power division state and a pass-through state, to prevent a crossover being introduced to a system and introduce an additional insertion loss.

According to a first aspect, this application provides a communication apparatus. The communication apparatus includes a first filter, a second filter, and a coupling control unit. The first filter includes at least one resonant cavity, and there is a first coupling rod in a 1^{st} resonant cavity of the first filter. The second filter includes at least one resonant cavity, and there is a second coupling rod in a 1^{st} resonant cavity of the second filter. The coupling control unit is located between the 1^{st} resonant cavity of the first filter and the 1^{st} resonant cavity of the second filter, the coupling control unit is connected to the first coupling rod, and the coupling control unit is connected to the second coupling rod. The first filter and the second filter are configured to filter a radio frequency signal. The coupling control unit is configured to control connection or disconnection between the first coupling rod and the second coupling rod. If the first coupling rod is connected to the second coupling rod, an operating status of the communication apparatus is a power division state; or if the first coupling rod is disconnected from the second coupling rod, an operating status of the communication apparatus is a pass-through state.

With reference to the first aspect, in a possible implementation, the coupling control unit includes a PIN diode 11, a PIN diode 12, a voltage control pin V1, a voltage control pin V2, a microstrip 1, and a microstrip 2. The voltage control pin V1 is connected to the PIN diode 11. A positive electrode of the PIN diode 11 is connected to the microstrip 1, and a negative electrode of the PIN diode 11 is connected to the microstrip 2. The voltage control pin V2 is connected to the PIN diode 12. A negative electrode of the PIN diode 12 is connected to the microstrip 1, and a positive electrode of the PIN diode 12 is connected to the microstrip 2. The microstrip 1 is connected to the first coupling rod. The microstrip 2 is connected to the second coupling rod.

With reference to the first aspect, in a possible implementation, if the voltage control pin V1 provides a positive voltage to the PIN diode 11, and the voltage control pin V2 provides a positive voltage to the PIN diode 12, the PIN diode 11 and the PIN diode 12 are conducted, and the first coupling rod is connected to the second coupling rod; or if the voltage control pin V1 provides a negative voltage to the PIN diode 11, and the voltage control pin V2 provides a negative voltage to the PIN diode 12, the PIN diode 11 and the PIN diode 12 are in a cutoff state, and the first coupling rod is disconnected from the second coupling rod.

With reference to the first aspect, in a possible implementation, the coupling control unit includes a power supply assembly, a switch assembly, a switch control assembly, a microstrip 3, a microstrip 4, and a load resistor. The power supply assembly is connected to the switch assembly. The switch control assembly is connected to the switch assembly. The switch assembly is connected to the microstrip 3, and the switch assembly is connected to the microstrip 4. The load resistor is grounded, and the switch assembly is further connected to the load resistor. The microstrip 3 is connected to the first coupling rod. The microstrip 4 is connected to the second coupling rod.

With reference to the first aspect, in a possible implementation, if a switch controller controls the switch assembly to connect the microstrip 3 and the microstrip 4, the first coupling rod is connected to the second coupling rod; or if the switch control assembly controls the switch assembly to connect to the load resistor, the first coupling rod is disconnected from the second coupling rod.

According to a second aspect, this application provides a communication apparatus. The communication apparatus includes a first filter, a second filter, and a common resonant cavity. The first filter includes at least one resonant cavity, and the second filter includes at least one resonant cavity. The common resonant cavity is located between a 1^{st} resonant cavity of the first filter and a 1^{st} resonant cavity of the second filter, the common resonant cavity is connected to the 1^{st} resonant cavity of the first filter, and the common resonant cavity is connected to the 1^{st} resonant cavity of the second filter. The first filter and the second filter are configured to filter a radio frequency signal. The common resonant cavity is configured to: isolate the first filter from the second filter, or couple the first filter to the second filter. If the first filter is isolated from the second filter, an operating status of the communication apparatus is a pass-through state; or if the first filter is coupled to the second filter, an operating status of the communication apparatus is a power division state.

With reference to the second aspect, in a possible implementation, the common resonant cavity further includes a varactor diode, and the varactor diode is configured to control a resonant frequency of the common resonant cavity. If the varactor diode controls the resonant frequency of the common resonant cavity to be far away from an operating frequency band of the first filter and the second filter, the first filter is isolated from the second filter; or if the varactor diode controls the resonant frequency of the common resonant cavity to be within an operating frequency band of the first filter and the second filter, the first filter is coupled to the second filter.

According to a third aspect, this application provides a communication apparatus. The communication apparatus includes a first filter, a second filter, and a ground control assembly. The first filter includes at least one resonant cavity, and the second filter includes at least one resonant cavity. The ground control assembly is connected to a 1^{st} resonant cavity of the second filter. The first filter and the second filter are configured to filter a radio frequency signal. The ground control assembly is configured to control whether the 1^{st} resonant cavity of the second filter is grounded. If the 1^{st} resonant cavity of the second filter is not grounded, an operating status of the communication apparatus is a power division state; or if the 1^{st} resonant cavity of the second filter is grounded, an operating status of the communication apparatus is a pass-through state.

With reference to the third aspect, in a possible implementation, the ground control assembly is a PIN diode.

### BRIEF DESCRIPTION OF DRAWINGS

FIG. 1 is a diagram of a communication system according to an embodiment of this application;
FIG. 2 is a diagram of a structure of a communication apparatus according to an embodiment of this application;
FIG. 3 is a diagram of connection and disconnection between a first coupling rod and a second coupling rod according to an embodiment of this application;
FIG. 4 is a diagram of a structure of a coupling control unit according to an embodiment of this application;
FIG. 5 is a diagram of a structure of a coupling control unit according to an embodiment of this application;
FIG. 6 is a diagram of connection and disconnection control of a switch assembly according to an embodiment of this application;
FIG. 7 is a diagram of a structure of another communication apparatus according to an embodiment of this application;
FIG. 8 is a diagram of locations of a common resonant cavity and a varactor diode according to an embodiment of this application; and
FIG. 9 is a diagram of a structure of still another communication apparatus according to an embodiment of this application.

### DESCRIPTION OF EMBODIMENTS

The following describes the technical solutions in embodiments of this application in more detail.

Terms used in the following embodiments of this application are merely intended to describe specific embodiments, but are not intended to limit this application. As used in this specification and the appended claims of this application, singular expressions "one", "a", "the", "the foregoing", "this", and "the one" are also intended to include plural expressions, unless otherwise specified in the context clearly. It should be further understood that the term "and/or" used in this application refers to and includes any or all possible combinations of one or more listed items. The term "a plurality of" used in this application means two or more.

It should be noted that, the terms "first", "second", "third", and the like in this specification, claims, and accompanying drawings of this application are intended to distinguish between similar objects but do not necessarily indicate a specific order or sequence. It should be understood that data used in such a way are interchangeable in proper circumstances so that embodiments of this application described herein can be implemented in an order other than the order illustrated or described herein. In addition, the term "include" and any variants thereof mean to cover the non-exclusive inclusion, for example, a process, method, system, product, or server that includes a list of steps or units is not necessarily limited to those steps or units that are expressly listed, but may include other steps or units not expressly listed or are inherent to the process, method, product, or device.

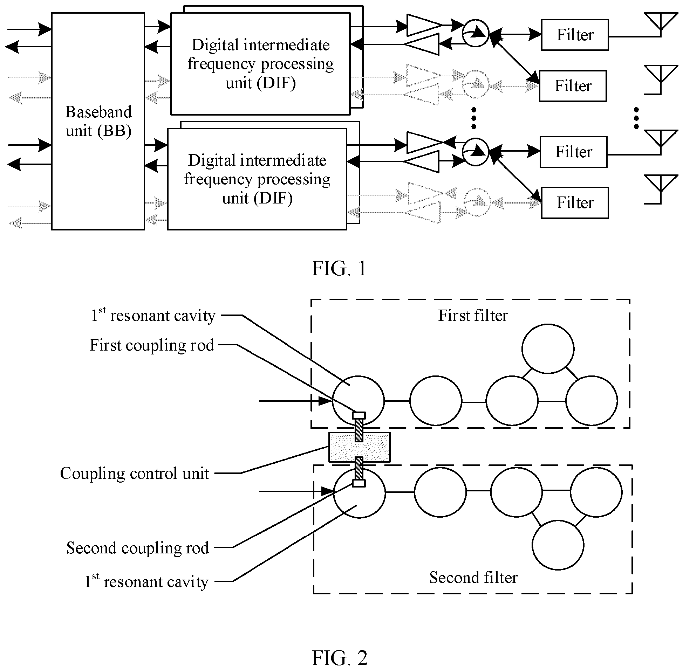

A communication apparatus in this application may be used in a communication system shown in FIG. 1. The communication system shown in FIG. 1 includes a baseband unit (baseband unit, BBU), a digital intermediate frequency (digital intermediate process unit, DIF) processing unit, a filter, and an antenna. The communication apparatus in this application mainly relates to the filter in FIG. 1. In a possible example, FIG. 1 is a diagram of a structure of the communication system as an access network device.

It should be noted that the access network device in this application may be a base station (Base Station, BS). The base station may provide a communication service to a plurality of terminal devices, or a plurality of base stations may provide a communication service to a same terminal device. In this embodiment of this application, the base station is an apparatus deployed in a radio access network to provide a wireless communication function for the terminal device. The base station device may be a base station, a relay station, or an access point. The base station may be an eNB or an eNodeB (Evolved NodeB) in long term evolution (Long Term Evolution, LTE). Alternatively, the base station device may be a radio controller in a cloud radio access network (Cloud Radio Access Network, CRAN) scenario. Alternatively, the base station device may be a base station device in a future 6G network or a network device in a future evolved PLMN network. Alternatively, the base station device may be a wearable device, a vehicle-mounted device, or the like. In embodiments of this application, an apparatus configured to implement a function of a network device may be the network device, or may be an apparatus that can support the network device in implementing the function, for example, a chip system. The apparatus may be installed in the network device. For example, the network device may be a central unit (central unit, CU), or may be a distributed unit (distributed unit, DU). The CU herein completes functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of some or all of physical layers. For specific description of the foregoing protocol layers, refer to related technical specifications of the 3^{rd} generation partnership project (3^{rd} generation partnership project, 3GPP).

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

The following describes some concepts in embodiments of this application.

### 1. Resonant cavity

A resonant cavity (also referred to as a resonant cavity) is a metal cavity (or a dielectric cavity) used as a resonant circuit in a microwave band, so that a high-frequency electromagnetic field continuously oscillates in the resonant cavity. The resonant cavity is a resonant element operating at a microwave frequency. The resonant cavity is a dielectric area surrounded by a conductive wall (or a magnetic conductive wall) in any shape and can form electromagnetic oscillation in the resonant cavity. The resonant cavity has characteristics of storing electromagnetic energy and selecting a signal of a specific frequency. The resonant cavity is widely applied in a microwave technology. For example, the microwave resonant cavity may be used as a frequency selection element in microwave frequency multiplication and an amplifier, and directly constitute a microwave filter for microwave measurement and microwave communication.

### 2. Filter (filter)

The filter is mainly a frequency selection apparatus, which can enable a specific frequency component in a signal to pass through and greatly attenuate another frequency component in the signal. In other words, a filtering process of the filter may be described as effectively filtering out a communication signal in a specific frequency band or a communication signal outside the specific frequency band from the communication signal, to obtain the communication signal in the specific frequency band, or filtering out the communication signal in the specific frequency band.

### 3. Microstrip

A microstrip is a wiring method for a high-speed transmission line in a printed circuit board (printed circuit board, PCB) design. The microstrip is a microwave transmission line formed by a single conductor strip that is supported on a dielectric substrate and a planar structure transmission line suitable for manufacturing a microwave integrated circuit. Compared with a metal waveguide, the microstrip has a small size, a light weight, a wide frequency band for use, high reliability, and a low manufacturing cost.

### 4. Reconfigurable cross coupler

The reconfigurable cross coupler is used between two power amplifiers and two filters, and is configured to implement two operating statuses of output power of a communication system that are a pass-through state and a power division state. In the pass-through state, output power of the two amplifiers is fed to antenna elements through the respective filters. In the power division state, one amplifier of the two amplifiers is disabled, and output power of the other amplifier is divided to antenna elements corresponding to the two filters.

### 5. Insertion loss (the insertion loss for short below)

The insertion loss is a loss of load power that occurs at a location in a transmission system due to an insertion of an element or a component, and the loss is expressed as a ratio, in a unit of decibels (dB), of power received on the load before the insertion of the element or the component to power received on the same load after the insertion.

Power consumption of a radio frequency channel (including the power amplifier) accounts for a main part of power consumption of a base station module. Generally, the reconfigurable cross coupler may be introduced after the power amplifier of the radio frequency channel, to ensure base station performance and reduce the power consumption of the base station module. However, an additional component (namely, the reconfigurable cross coupler) is introduced to the original radio frequency channel, causing an additional insertion loss to be introduced to the communication system.

In this application, a function of the reconfigurable cross coupler is implemented in a manner of jointing an original component design in the radio frequency channel, so that the communication system can switch between the power division state or the pass-through state, to prevent problems that the additional component (namely, the reconfigurable cross coupler) is introduced and the additional insertion loss is introduced.

FIG. 2 is a diagram of a structure of a communication apparatus according to an embodiment of this application. The communication apparatus shown in FIG. 2 may be used in the communication system shown in FIG. 1. For example, the communication apparatus may be the filter in FIG. 1. The communication apparatus includes a first filter, a second filter, and a coupling control unit. Specifically, the first filter includes at least one resonant cavity, and there is a first coupling rod in a 1^{st} resonant cavity of the first filter. The second filter includes at least one resonant cavity, and there is a second coupling rod in a 1^{st} resonant cavity of the second filter. The coupling control unit is located between the 1^{st} resonant cavity of the first filter and the 1^{st} resonant cavity of the second filter, the coupling control unit is connected to the first coupling rod, and the coupling control unit is connected to the second coupling rod.

The first filter and the second filter are configured to filter a radio frequency signal. The first filter and the second filter each correspond to a different radio frequency channel. For example, a first power amplifier, the first filter, and a first antenna element form a radio frequency channel 1, and a second power amplifier, the second filter, and a second antenna element form a radio frequency channel 2.

It should be noted that in FIG. 2, an example in which both the first filter and the second filter are filters including five resonant cavities is used for illustrative description, and should not be considered as a specific limitation on this application.

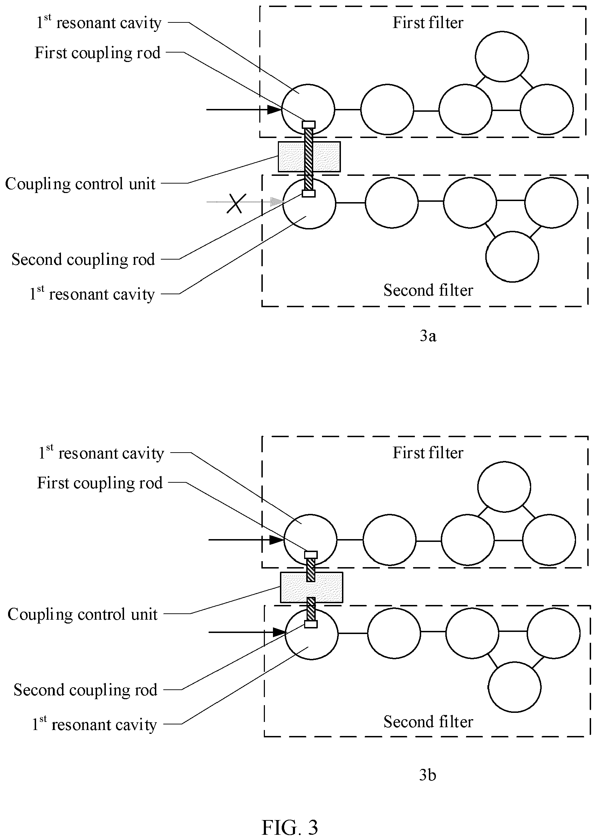

The coupling control unit is configured to control connection or disconnection between the first coupling rod and the second coupling rod. If the first coupling rod is connected to the second coupling rod, an operating status of the communication apparatus is a power division state; or if the first coupling rod is disconnected from the second coupling rod, an operating status of the communication apparatus is a pass-through state. For example, FIG. 3 is a diagram of the connection and the disconnection between the first coupling rod and the second coupling rod. When the coupling control unit controls the first coupling rod to be connected to the second coupling rod, as shown in a module 3a in FIG. 3, a path is formed between the first coupling rod and the second coupling rod, and the communication apparatus operates in the power division state. When the coupling control unit controls the first coupling rod to be disconnected from the second coupling rod, as shown in a module 3b in FIG. 3, the first coupling rod is disconnected from the second coupling rod, and the communication apparatus operates in the pass-through state.

In other words, in an application scenario, the first power amplifier, the first filter, and the first antenna element form the radio frequency channel 1, and the second power amplifier, the second filter, and the second antenna element form the radio frequency channel 2. In this scenario, as shown in the module 3a in FIG. 3, when the coupling control unit controls the first coupling rod to be connected to the second coupling rod, the radio frequency channel 1 and the radio frequency channel 2 are relatively independent. To be specific, a signal 1 output by the first power amplifier is transmitted through the radio frequency channel 1, and a signal 2 output by the second power amplifier is transmitted through the radio frequency channel 2. In this scenario, as shown in the module 3b in FIG. 3, when the coupling control unit controls the first coupling rod to be disconnected from the second coupling rod, the radio frequency channel between the second power amplifier and the second filter is shut down. Power of a signal 1 output by the first power amplifier passes through the first filter and is fed to the first antenna element for transmission. In addition, a part of the power is further coupled to the second filter and fed to the second antenna element for transmission.

In conclusion, in a manner that the first coupling rod and the second coupling rod are disposed in the 1^{st} resonant cavity of the first filter and the 1^{st} resonant cavity of the second filter respectively, and the coupling control unit controls the connection and the disconnection between the first coupling rod and the second coupling rod, the first filter and the second filter can implement a filtering function and a cross-connection function (to be specific, the communication apparatus operates in the pass-through state or the power division state), to prevent a reconfigurable cross coupler from being introduced to the communication system, and reduce an insertion loss of the system.

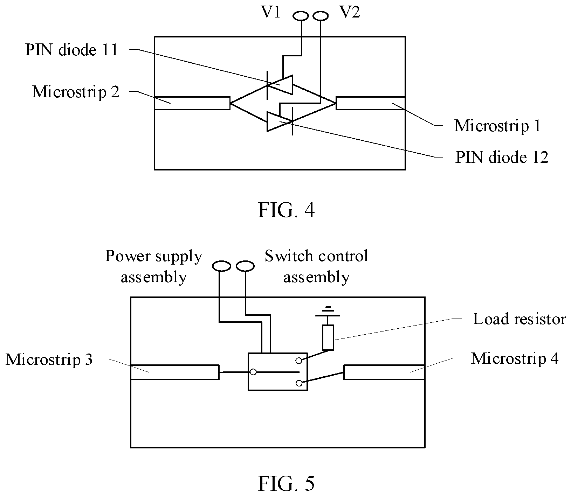

With reference to the communication apparatus provided in FIG. 2, the coupling control unit may be borne by using a PCB material, or may be designed on a same PCB board with a reverse coupling unit and a bias-T lightning protection circuit. In a possible implementation, a diagram of a structure of the coupling control unit may be shown in FIG. 4. The coupling control unit includes a PIN diode 11, a PIN diode 12, a voltage control pin V1, a voltage control pin V2, a microstrip 1, and a microstrip 2. The voltage control pin V1 is connected to the PIN diode 11. A positive electrode of the PIN diode 11 is connected to the microstrip 1, and a negative electrode of the PIN diode 11 is connected to the microstrip 2. The voltage control pin V2 is connected to the PIN diode 12. A negative electrode of the PIN diode 12 is connected to the microstrip 1, and a positive electrode of the PIN diode 12 is connected to the microstrip 2. The microstrip 1 is connected to the first coupling rod. The microstrip 2 is connected to the second coupling rod.

In a possible implementation, the first coupling rod is a metal rod, one end of the first coupling rod is located in the 1^{st} resonant cavity of the first filter and plays a role in coupling power, and the other end of the first coupling rod extends out the 1^{st} resonant cavity of the first filter and is soldered on the PCB board to connect to the microstrip 1. The second coupling rod is a metal rod, one end of the second coupling rod is located in the 1^{st} resonant cavity of the second filter and plays a role in coupling power, and the other end of the second coupling rod extends out the 1^{st} resonant cavity of the second filter and is soldered on the PCB board to connect to the microstrip 2. It should be known that the coupling rod may be fastened in a resin support manner, and a specific coupling coefficient of the coupling rod may be obtained by performing comprehensive simulation design based on a structure and a resin parameter.

With reference to the communication apparatus shown in FIG. 2, in an embodiment, if the voltage control pin V1 provides a positive voltage to the PIN diode 11, and the voltage control pin V2 provides a positive voltage to the PIN diode 12, the PIN diode 11 and the PIN diode 12 are conducted, and the first coupling rod is connected to the second coupling rod; or if the voltage control pin V1 provides a negative voltage to the PIN diode 11, and the voltage control pin V2 provides a negative voltage to the PIN diode 12, the PIN diode 11 and the PIN diode 12 are in a cutoff state, and the first coupling rod is disconnected from the second coupling rod.

In other words, that the coupling control unit shown in FIG. 4 controls the connection and the disconnection between the first coupling rod and the second coupling rod may be specifically embodied as follows: The control unit controls the connection and the disconnection between the first coupling rod and the second coupling rod based on a voltage direction provided by the voltage control pin V1 and the voltage control pin V2. If both the voltage control pin V1 and the voltage control pin V2 provide positive voltages, the first coupling rod is connected to the second coupling rod, and the operating status of the communication apparatus in FIG. 2 is the power division state; or if both the voltage control pin V1 and the voltage control pin V2 provide negative voltages, the first coupling rod is disconnected from the second coupling rod, and the operating status of the communication apparatus in FIG. 2 is the pass-through state.

With reference to the communication apparatus provided in FIG. 2, the coupling control unit may be borne by using a PCB material, or may be designed on a same PCB board with a reverse coupling unit and a bias-T lightning protection circuit. In a possible implementation, a diagram of a structure of the coupling control unit may be shown in FIG. 5. The coupling control unit includes a power supply assembly, a switch assembly, a switch control assembly, a microstrip 3, a microstrip 4, and a load resistor. The power supply assembly is connected to the switch assembly. The switch control assembly is connected to the switch assembly. The switch assembly is connected to the microstrip 3, and the switch assembly is connected to the microstrip 4. The load resistor is grounded, and the switch assembly is further connected to the load resistor. The microstrip 3 is connected to the first coupling rod. The microstrip 4 is connected to the second coupling rod.

In a possible implementation, the first coupling rod is a metal rod, one end of the first coupling rod is located in the 1^{st} resonant cavity of the first filter and plays a role in coupling power, and the other end of the first coupling rod extends out the 1^{st} resonant cavity of the first filter and is soldered on the PCB board to connect to the microstrip 3. The second coupling rod is a metal rod, one end of the second coupling rod is located in the 1^{st} resonant cavity of the second filter and plays a role in coupling power, and the other end of the second coupling rod extends out the 1^{st} resonant cavity of the second filter and is soldered on the PCB board to connect to the microstrip 4. It should be known that the coupling rod may be fastened in a resin support manner, and a specific coupling coefficient of the coupling rod may be obtained by performing comprehensive simulation design based on a structure and a resin parameter.

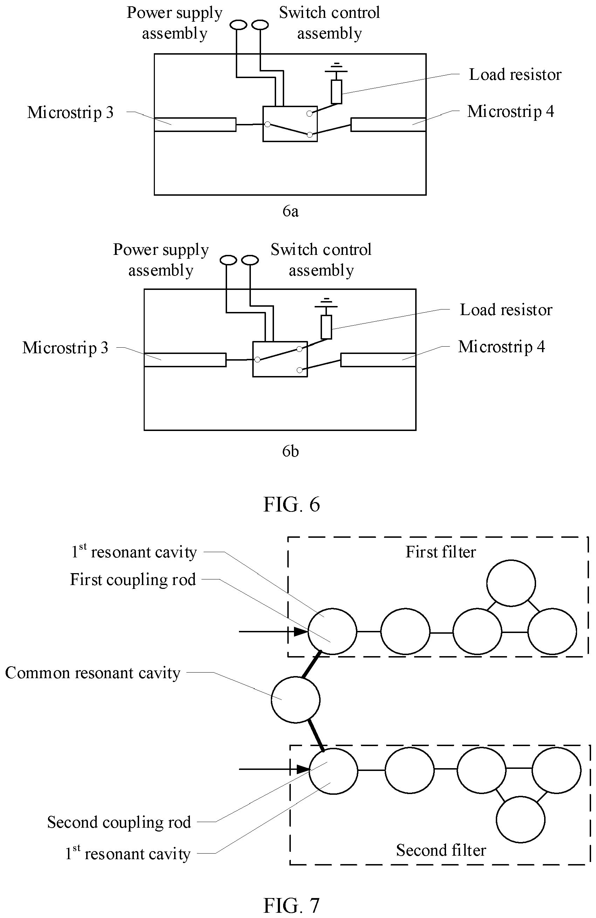

With reference to the communication apparatus shown in FIG. 2, in an embodiment, refer to FIG. 6. FIG. 6 is a diagram of connection and disconnection control of a switch assembly. As shown in a module 6a in FIG. 6, if a switch controller controls the switch assembly to connect the microstrip 3 and the microstrip 4, the first coupling rod is connected to the second coupling rod, and the operating status of the communication apparatus in FIG. 2 is the power division state. As shown in a module 6b in FIG. 6, if the switch control assembly controls the switch assembly to connect to the load resistor, the first coupling rod is disconnected from the second coupling rod, and the operating status of the communication apparatus in FIG. 2 is the pass-through state.

FIG. 7 is a diagram of a structure of another communication apparatus according to an embodiment of this application. The communication apparatus shown in FIG. 7 may be used in the communication system shown in FIG. 1. For example, the communication apparatus may be the filter in FIG. 1. The communication apparatus includes a first filter, a second filter, and a common resonant cavity. Specifically, the first filter includes at least one resonant cavity, and the second filter includes at least one resonant cavity. The common resonant cavity is located between a 1^{st} resonant cavity of the first filter and a 1^{st} resonant cavity of the second filter, the common resonant cavity is connected to the 1^{st} resonant cavity of the first filter, and the common resonant cavity is connected to the 1^{st} resonant cavity of the second filter.

The first filter and the second filter are configured to filter a radio frequency signal. The first filter and the second filter operate in a same operating frequency band, and the first filter and the second filter each correspond to a different radio frequency channel. For example, a first power amplifier, the first filter, and a first antenna element form a radio frequency channel 1, and a second power amplifier, the second filter, and a second antenna element form a radio frequency channel 2. Both the radio frequency channel 1 and the radio frequency channel 2 operate in two independent channels of a same operating frequency band, to be specific, a signal 1 transmitted by the radio frequency channel 1 and a signal 2 transmitted by the radio frequency channel 2 belong to the same frequency band.

It should be noted that in FIG. 7, an example in which both the first filter and the second filter are filters including five resonant cavities is used for illustrative description, and should not be considered as a specific limitation on this application.

The common resonant cavity is configured to: isolate the first filter from the second filter, or couple the first filter to the second filter. If the first filter is isolated from the second filter, an operating status of the communication apparatus is a pass-through state; or if the first filter is coupled to the second filter, an operating status of the communication apparatus is a power division state.

Specifically, the first power amplifier, the first filter, and the first antenna element form the radio frequency channel 1, and the second power amplifier, the second filter, and the second antenna element form the radio frequency channel 2. A resonant frequency of the common resonant cavity is adjustable. When the resonant frequency of the common resonant cavity is adjusted to be far away from the operating frequency band of the first filter and the second filter, the first filter is isolated from the second filter. The radio frequency channel 1 and the radio frequency channel 2 are two independent channels, and the communication apparatus operates in the pass-through state. When the resonant frequency of the common resonant cavity is adjusted to be within the operating frequency band of the first filter and the second filter, the first filter is coupled to the second filter, to be specific, one radio frequency channel (for example, the radio frequency channel 2) is shut down for energy saving, and power of the other radio frequency channel (namely, the radio frequency channel 1) passes through the common resonant cavity and a part of the power is coupled to the filter (namely, the second filter) of the radio frequency channel that is shut down, so that the communication apparatus operates in the power division state.

In conclusion, the first filter and the second filter may be isolated (or coupled) by adjusting the resonant frequency of the common resonant cavity, so that the first filter and the second filter implement a filtering function and a cross-connection function (to be specific, the communication apparatus operates in the pass-through state or the power division state), to prevent a reconfigurable cross coupler from being introduced to the communication system, and reduce an insertion loss of the system.

With reference to the communication apparatus provided in FIG. 7, the common resonant cavity further includes a varactor diode, and the varactor diode is configured to control (or adjust) the resonant frequency of the common resonant cavity. In other words, if the varactor diode controls the resonant frequency of the common resonant cavity to be far away from the operating frequency band of the first filter and the second filter, the first filter is isolated from the second filter; or if the varactor diode controls the resonant frequency of the common resonant cavity to be within the operating frequency band of the first filter and the second filter, the first filter is coupled to the second filter.

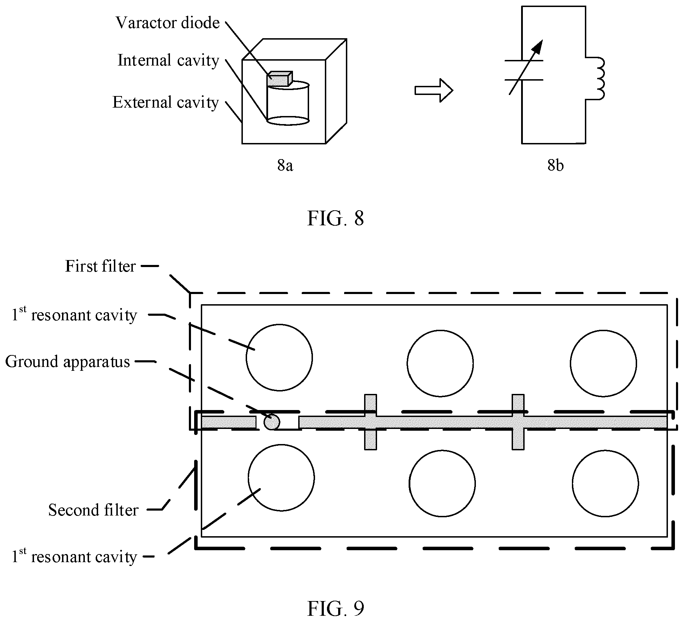

Specifically, a diagram of locations of the common resonant cavity and the varactor diode is shown in a module 8a in FIG. 8. The varactor diode is located between an external cavity and an internal cavity of the common resonant cavity. For an equivalent circuit diagram of the module 8a, refer to a module 8b in FIG. 8. The varactor diode in the module 8a may be equivalent to a variable capacitor in the module 8b. For an equivalent inductor of the common resonant cavity, refer to an inductor shown in the module 8b. It may be inferred from the equivalent circuit diagram shown in the module 8b that the resonant frequency of the common resonant cavity may be controlled (or adjusted) by changing a voltage of the varactor diode. In a possible implementation, if a first voltage is applied to the varactor diode, a capacitance value of the varactor diode is maximized or minimized, so that the varactor diode may cooperate with a cavity (including the internal cavity and the external cavity of the common resonant cavity), and the resonant frequency of the common resonant cavity is far away from the operating frequency band of the first filter and the second filter. If a second voltage is applied to the varactor diode, a capacitance value of the varactor diode cooperates with a cavity (including the internal cavity and the external cavity of the common resonant cavity), and the resonant frequency of the common resonant cavity may be within the operating frequency band of the first filter and the second filter. This implements that the first filter is coupled to the second filter. Specific values of the first voltage and the second voltage may be adjusted based on a specific application scenario. This is not specifically limited in this application.

FIG. 9 is a diagram of a structure of still another communication apparatus according to an embodiment of this application. The communication apparatus shown in FIG. 9 may be used in the communication system shown in FIG. 1. For example, the communication apparatus may be the filter in FIG. 1. The communication apparatus includes a first filter, a second filter, and a ground control assembly. Specifically, the first filter includes at least one resonant cavity, and the second filter includes at least one resonant cavity. The ground control assembly is connected to a 1^{st} resonant cavity of the second filter.

The first filter and the second filter are configured to filter a radio frequency signal. For descriptions of the first filter and the second filter, refer to descriptions of the first filter and the second filter in FIG. 7. Repeated parts are not described again.

It should be noted that in FIG. 9, an example in which both the first filter and the second filter are filters including three resonant cavities is used for illustrative description, and should not be considered as a specific limitation on this application.

The ground control assembly is configured to control whether the 1^{st} resonant cavity of the second filter is grounded. If the 1^{st} resonant cavity of the second filter is not grounded, an operating status of the communication apparatus is a power division state; or if the 1^{st} resonant cavity of the second filter is grounded, an operating status of the communication apparatus is a pass-through state.

In other words, in FIG. 9, an external cavity of each resonant cavity of the first filter is adjacent to an external cavity of each resonant cavity of the second filter, a window is opened between an external cavity of a 1^{st} resonant cavity of the first filter and an external cavity of a 1^{st} resonant cavity of the second filter, and a ground assembly is disposed. When the ground assembly is grounded, the 1^{st} resonant cavity of the first filter is isolated from the 1^{st} resonant cavity of the second filter. It may be understood that the first filter is isolated from the second filter, a radio frequency channel 1 corresponding to the first filter and a radio frequency channel 2 corresponding to the second filter are two independent channels, and the communication apparatus operates in the pass-through state. When the ground assembly is not grounded, the first filter is coupled to the second filter, to be specific, one radio frequency channel (for example, the radio frequency channel 2 corresponding to the second filter) is shut down for energy saving, and a part of power of the other radio frequency channel (namely, the radio frequency channel 1 corresponding to the first filter) may be coupled to the filter (namely, the second filter) of the radio frequency channel that is shut down, so that the communication apparatus operates in the power division state.

In conclusion, the first filter and the second filter may be isolated (or coupled) by controlling whether the 1^{st} resonant cavity of the second filter is grounded, so that the first filter and the second filter implement a filtering function and a cross-connection function (to be specific, the communication apparatus operates in the pass-through state or the power division state), to prevent a reconfigurable cross coupler from being introduced to the communication system, and reduce an insertion loss of the system.

With reference to the communication apparatus provided in FIG. 9, the ground control assembly includes but is not limited to a PIN diode.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state drive, SSD)), or the like.

A person of ordinary skill in the art may understand that various numbers such as "first" and "second" in this application are merely used for differentiation for ease of description and are not used to limit the scope of embodiments of this application or a sequence. Execution sequences of processes should be determined based on functions and internal logic of the processes.

A person of ordinary skill in the art may be aware that, in combination with the examples described in embodiments disclosed in this specification, modules may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

## Claims

1. A communication apparatus, wherein the communication apparatus comprises a first filter, a second filter, and a coupling control unit;
the first filter comprises at least one resonant cavity, and there is a first coupling rod in a 1^{st} resonant cavity of the first filter; the second filter comprises at least one resonant cavity, and there is a second coupling rod in a 1^{st} resonant cavity of the second filter; and the coupling control unit is located between the 1^{st} resonant cavity of the first filter and the 1^{st} resonant cavity of the second filter, the coupling control unit is connected to the first coupling rod, and the coupling control unit is connected to the second coupling rod;
the first filter and the second filter are configured to filter a radio frequency signal; and
the coupling control unit is configured to control connection or disconnection between the first coupling rod and the second coupling rod; and if the first coupling rod is connected to the second coupling rod, an operating status of the communication apparatus is a power division state; or if the first coupling rod is disconnected from the second coupling rod, an operating status of the communication apparatus is a pass-through state.

2. The apparatus according to claim 1, wherein the coupling control unit comprises a PIN diode 11, a PIN diode 12, a voltage control pin V1, a voltage control pin V2, a microstrip 1, and a microstrip 2; and
the voltage control pin V1 is connected to the PIN diode 11, a positive electrode of the PIN diode 11 is connected to the microstrip 1, a negative electrode of the PIN diode 11 is connected to the microstrip 2, the voltage control pin V2 is connected to the PIN diode 12, a negative electrode of the PIN diode 12 is connected to the microstrip 1, a positive electrode of the PIN diode 12 is connected to the microstrip 2, the microstrip 1 is connected to the first coupling rod, and the microstrip 2 is connected to the second coupling rod.

3. The apparatus according to claim 2, wherein if the voltage control pin V1 provides a positive voltage to the PIN diode 11, and the voltage control pin V2 provides a positive voltage to the PIN diode 12, the PIN diode 11 and the PIN diode 12 are conducted, and the first coupling rod is connected to the second coupling rod; or
if the voltage control pin V1 provides a negative voltage to the PIN diode 11, and the voltage control pin V2 provides a negative voltage to the PIN diode 12, the PIN diode 11 and the PIN diode 12 are in a cutoff state, and the first coupling rod is disconnected from the second coupling rod.

4. The apparatus according to claim 1, wherein the coupling control unit comprises a power supply assembly, a switch assembly, a switch control assembly, a microstrip 3, a microstrip 4, and a load resistor; and
the power supply assembly is connected to the switch assembly, the switch control assembly is connected to the switch assembly, the switch assembly is connected to the microstrip 3, the switch assembly is connected to the microstrip 4, the load resistor is grounded, the switch assembly is further connected to the load resistor, the microstrip 3 is connected to the first coupling rod, and the microstrip 4 is connected to the second coupling rod.

5. The apparatus according to claim 4, wherein if the switch controller controls the switch assembly to connect the microstrip 3 and the microstrip 4, the first coupling rod is connected to the second coupling rod; or if the switch control assembly controls the switch assembly to connect to the load resistor, the first coupling rod is disconnected from the second coupling rod.

6. A communication apparatus, wherein the communication apparatus comprises a first filter, a second filter, and a common resonant cavity;
the first filter comprises at least one resonant cavity, and the second filter comprises at least one resonant cavity; and the common resonant cavity is located between a 1^{st} resonant cavity of the first filter and a 1^{st} resonant cavity of the second filter, the common resonant cavity is connected to the 1^{st} resonant cavity of the first filter, and the common resonant cavity is connected to the 1^{st} resonant cavity of the second filter;
the first filter and the second filter are configured to filter a radio frequency signal; and
the common resonant cavity is configured to: isolate the first filter from the second filter, or couple the first filter to the second filter; and if the first filter is isolated from the second filter, an operating status of the communication apparatus is a pass-through state; or if the first filter is coupled to the second filter, an operating status of the communication apparatus is a power division state.

7. The apparatus according to claim 6, wherein the common resonant cavity further comprises a varactor diode, and the varactor diode is configured to control a resonant frequency of the common resonant cavity; and
if the varactor diode controls the resonant frequency of the common resonant cavity to be far away from an operating frequency band of the first filter and the second filter, the first filter is isolated from the second filter; or
if the varactor diode controls the resonant frequency of the common resonant cavity to be within an operating frequency band of the first filter and the second filter, the first filter is coupled to the second filter.

8. A communication apparatus, wherein the communication apparatus comprises a first filter, a second filter, and a ground control assembly;
the first filter comprises at least one resonant cavity, the second filter comprises at least one resonant cavity, and the ground control assembly is connected to a 1^{st} resonant cavity of the second filter;
the first filter and the second filter are configured to filter a radio frequency signal; and
the ground control assembly is configured to control whether the 1^{st} resonant cavity of the second filter is grounded; and if the 1^{st} resonant cavity of the second filter is not grounded, an operating status of the communication apparatus is a power division state; or if the 1^{st} resonant cavity of the second filter is grounded, an operating status of the communication apparatus is a pass-through state.

9. The apparatus according to claim 8, wherein the ground control assembly is a PIN diode.
